# EUROPÄISCHE PATENTSCHRIFT

(11) **EP 1 219 146 B1**
(45) Veröffentlichungstag und Bekanntmachung des Hinweises auf die Patenterteilung: **17.12.2003**
(21) Anmeldenummer: 00969404.3
(22) Anmeldetag: 04.10.2000
(51) Int. Cl.: H05F 3/04

(54) **VORRICHTUNG UND VERFAHREN ZUM MINIMIEREN VON POSITIVEN UND/ODER NEGATIVEN LADUNGEN AUF EINER OBERFLÄCHE EINES KUNSTSTOFFTEILS**
DEVICE AND METHOD FOR MINIMISING POSITIVE AND/OR NEGATIVE CHARGE FORMATION ON THE SURFACE OF A PLASTIC COMPONENT
DISPOSITIF ET PROCEDE POUR REDUIRE A UN MINIMUM LES CHARGES POSITIVES ET/OU NEGATIVES SUR UNE SURFACE D'UNE PIECE EN MATIERE PLASTIQUE

(30) Priorität: 08.10.1999 DE 19948580
(43) Veröffentlichungstag der Anmeldung: 03.07.2002
(73) Patentinhaber: Gerwens, Winfried, 59872 Meschede (DE)
(72) Erfinder: Gerwens, Winfried, 59872 Meschede (DE)
(74) Vertreter: Meinke, Jochen, Dipl.-Ing.
(86) Internationale Anmeldenummer: EP0009693
(87) Internationale Veröffentlichungsnummer: WO01028297

(56) Entgegenhaltungen:
- DE-A- 19 915 770
- US-A- 4 729 057
- PATENT ABSTRACTS OF JAPAN vol. 010, no. 354 (P-521), 28. November 1986 (1986-11-28) & JP 61 151854 A (TOSHIBA CORP), 10. Juli 1986 (1986-07-10)
- PATENT ABSTRACTS OF JAPAN vol. 1996, no. 08, 30. August 1996 (1996-08-30) & JP 08 096425 A (YUUSHIN SEIKI:KK), 12. April 1996 (1996-04-12)

## Beschreibung

Die Erfindung betrifft eine Vorrichtung und ein Verfahren zum Minimieren bzw. zum Unterbinden von positiven und/oder negativen Ladungen auf einer Oberfläche eines Kunststoffteils, das mittels Spritzgießen, Pressen oder Ziehverfahren in einem ein Entnahmeteil für das Kunststoffteil aufweisenden Werkzeug herstellbar ist.

Bei der Herstellung von Kunststoffteilen, beispielsweise in einer Spritzgießmaschine, entstehen an einer Oberfläche des Kunststoffteils elektrostatische Aufladungen, die in der Umgebungsluft enthaltene Schwebeteilchen anziehen, so dass es auf der Oberfläche zu Verunreinigungen kommt. Zur Vermeidung solcher Verunreinigungen wurden bislang Vorrichtungen mit reihenförmig angeordneten Elektroden nach Art einer in der US-A-4 092 543 beschriebenen eingesetzt. Die bekannte Vorrichtung weist dabei eine Mehrzahl von reihenförmig angeordneten Elektroden auf, die an einer Hochspannungsquelle angeschlossen sind. Die Hochspannungsquelle weist einen solchen hohen Betrag auf, dass in der Nähe der Elektroden positive und/oder negative Ionen erzeugt werden, die mittels eines Ventilators in Richtung des mit einer Verunreinigung an der Oberfläche versehenen Kunststoffteils bewegt werden. Nachteilig an der bekannten Vorrichtung ist, dass diese durch die reihenförmige Anordnung der Elektroden und der zusätzlichen Luftführungsmittel sehr aufwendig ausgebildet ist und insbesondere bei geometrisch komplexen Kunststoffteilen mit einer Mehrzahl von begrenzten Oberflächensegmenten nicht den gewünschten Reinheitseffekt bewirkt.

Aus Patent Abstracts of Japan vol. 010, no. 354 (P-521), 28.11.1986 & JP 61 151854 A ist eine Vorrichtung nach dem Oberbegriff des Patentanspruchs 1 bekannt. Diese Vorrichtung ist auf eine potenzierte Ionenbewegung angelegt, die über eine Entfernungsstrecke das Behandlungsobjekt beeinflussen soll. Dabei wird ionisierte Luft zur Kühlung und Neutralisierung beim Spritzgießen ebener Scheiben, wie z.B. CD's eingesetzt. Aus US-A-4 729 057 ist eine Vorrichtung bekannt, die bei schwacher Luftbewegung das Trimmen des Raumes über einer Arbeitsebene bezweckt, um eine schmutzfreie abgeschirmte ladungsfreie Zone durch Ionenaustausch für den Potentialausgleich und einen atmosphärischen überdruck zu erzeugen. Derartige Anforderungen bestehen für Montageflächen in einer Schutzbox, wo Elektronikbauteile ohne Gefährdung der voreingestellten Ladungsspeicherung für konfigurierte Funktionen montiert werden und die Löttemperatur wichtig ist.

Aufgabe der vorliegenden Erfindung ist es, eine Vorrichtung und Verfahren zum Minimieren bzw. zum Unterbinden von positiven und/oder negativen Ladungen auf einer Oberfläche eines Kunststoffteils anzugeben, welche eine Neutralisierung der Oberfläche mit einem erheblich besseren Wirkungsgrad und geringerem Aufwand ermöglichen.

Diese Aufgabe wird bei einer Vorrichtung der eingangs bezeichneten Art erfindungsgemäß dadurch gelöst, dass mindestens eine Elekrode vorgesehen ist, die auf eine Kante des Kunststoffteils ausgerichtet ist, und dass die Elektrode derart von einer Steuereinheit angesteuert ist, dass von der Elektrode ein veränderbares elektrisches Feld hoher Intensität auf die Kante des Kunststoffteils ausgeht, wobei das Entnahmeteil mindestens eine Elektrode aufweist, die auf die Oberfläche des Kunststoffteils ausgerichtet ist.

Überraschenderweise hat sich gezeigt, dass bei Ausrichtung einer Elektrode auf eine Kante eines Kunststoffteils und Beaufschlagung derselben mit einem veränderbaren elektrischen Feld hoher Intensität eine Depolarisierung des Kunststoffteils eintritt, so dass das Kunststoffteil zum Beispiel aus einer Spritzgießform frei von unerwünscht angelagerten Staubpartikeln entnommen werden kann. vorzugsweise wird das Kunststoffteil mit einem pulsierenden oder stoßartigen elektrischen Feld beaufschlagt, das periodisch wechselt. Das elektrische Feld wird durch eine Hochspannungsqelle aufweisende an sich bekannte Steuereinheit bewirkt.

Bevorzugt ist vorgesehen, dass mindestens eine Elektrode oder ein paar von Elektroden dem Kunststoffteil zugeordnet ist, wobei die Elektroden im Wechsel von der Steuereinheit mit einer Hochspannung beaufschlagt werden. Dabei sind vorzugsweise die Elektroden nacheinander und die Elektrode wechselweise mit unterschiedlicher Polarität von der Steuereinheit ansteuerbar. Ferner sind die Elektroden bevorzugt jeweils rechtwinklig zu einer Kante des Kunststoffteils angeordnet.

Nach einer Weiterentwicklung der Erfindung ist eine Anzahl von Paaren von Elektroden unterschiedlicher Polarität und unterschiedlicher Orientierung vorgesehen, um eine Neutralisierung der Oberfläche des Kunststoffteils herbeizuführen. Es hat sich gezeigt, dass bereits zwei in einem bestimmten Abstand zueinander angeordnete gegenpolige Elektroden ein solches elektrisches Feld in der Nähe des Kunststoffteils erzeugen, dass eine wirkungsvolle Neutralisierung der ladung an der Oberfläche des Kunststoffteils erzielt wird.

Nach einer Ausgestaltung der Erfindung sind mehrere Paare von Elektroden räumlich verteilt angeordnet, die jeweils zu unterschiedlichen Oberflächensegmenten oder Kanten des Kunststoffteils ausgerichtet sind. Auf diese Weise ist die Vorrichtung platzsparend ausgebildet. Vorteilhaft wird hierdurch ermöglicht, dass ansonsten unzugängliche oberflächensegmente neutralisiert werden können.

Nach einer besonderen Ausführungsform der Erfindung sind jeweils ein Paar von Elektroden oder ein Einzelelement einem geradlinig oder bogenförmig begrenzten Oberflächensegment der Oberfläche oder eines Kantenbereichs des Kunststoffteils zugeordnet. Hierdurch kann gezielt auf jedes Oberflächensegment das elektrische Feld hoher Energie einwirken. Durch die Ausbildung des Paares von Elektroden als "zweipunkt"-Elektrode oder des Einzelelements als bifunktionale "Einpunkt"-Elektrode kann insbesondere eine punktuelle Beaufschlagung der Oberfläche mit einem elektrischen Feld erzeugt werden. Durch Veränderung des Abstandes der Elektroden zueinander kann auf einfache Weise eine Anpassung der Vorrichtung an die Dimension des Kunststoffteils herbeigeführt werden.

Nach einer bevorzugten Ausführungsform der Erfindung sind die Paare von Elektroden und/oder die Variante von Einzelelementen als Bipotentialelektrode randseitig in der Ebene des Werkzeugs angeordnet. Hierdurch wird gewährleistet, dass bereits beim Entformen eine Neutralisierung der auf der Oberfläche des Kunststoffteils angeordneten Ladungen herbeigeführt wird.

Nach einer Weiterentwicklung der Erfindung sind die Elektroden an einer Hochspannungsquelle angeschlossen, die eine pulsierende Hochspannung mit einer geringen Frequenz erzeugt. Hierdurch wirken impulsartig Kräfte auf die Ladungen an der Oberfläche des Kunststoffteils, die eine Neutralisierung derselben begünstigen.

Zur Lösung der Aufgabe zeichnet sich das eingangs beschriebene Verfahren mit den Merkmalen des Obergriffes Patentanspruchs 17 dadurch aus, dass das Kunststoffteil bereits vor dem Entformen einem durch eine Anzahl von jeweils zu unterschiedlichen Oberflächensegmenten ausgerichteten Elektroden bewirkten elektrischen Feld hoher Feldstärke ausgesetzt wird und das elektrische Feld mindestens bis zur Entnahme des Kunststoffteils aus dem Werkzeug aufrechterhalten wird, wobei die Oberfläche des Kunststoffteils während der Entnahme von einem von mindestens einer am Entnahmeteil angeordneten Elektrode ausgehenden elektrischen Feld beaufschlagt wird.

Der Vorteil des erfindungsgemäßen Verfahrens besteht insbesondere darin, dass durch das Erzeugen eines elektrischen Feldes bereits vor dem eigentlichen Entformungsvorgang Kräfte für die Neutralisierung der Ladungen an der Oberfläche zur Verfügung stehen, so dass unmittelbar beim oder nach dem Entstehen elektrostatischer Aufladungen des Kunststoffteils einen Ausgleich geschaffen wird. Hierdurch wird bereits vor dem Entstehen solcher Ladungen des Kunststoffteils denselben entgegengewirkt.

Ferner ist vorteilhaft vorgesehen, dass zumindest ein Paar von Elektroden unterschiedlicher Polarität und/oder ein Einzelelement der Elektrode in der Auslegung bipotentialer Polaritätsfolge zusammen mit einer Werkzeughälfte (zweites Formteil) des Werkzeugs bewegt wird. Weiterhin werden bevorzugt die Kunststoffteile während eines nachfolgenden Prozessschrittes zur Veredelung mit Paaren von Elektroden und/oder Einzelelementen der Elektrode behandelt.

Ein Ausführungsbeispiel der Erfindung wird nachfolgend anhand einer Zeichnung näher erläutert.

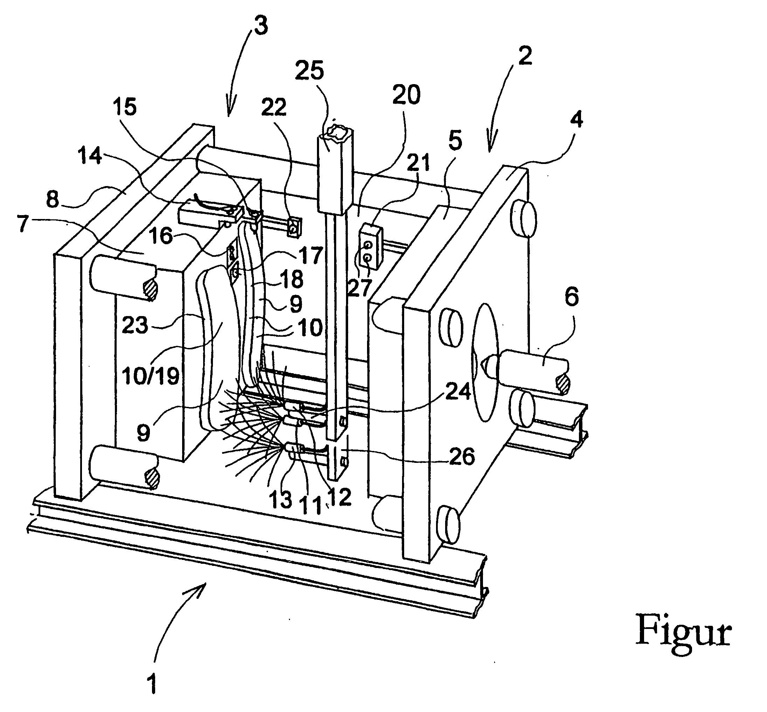

Die Zeichnung zeigt eine perspektivische Darstellung einer Vorrichtung beim Betrieb einer Spritzgießmaschine.

In der Figur ist schematisch ein Teil einer Spritzgießmaschine 1 dargestellt, die zwei Werkzeughälften 2 und 3 aufweist. Eine erste Werkzeughälfte 2 weist eine Aufspannplatte 4 und ein erstes Formteil 5 auf, die jeweils in einem zentralen Bereich eine Öffnung aufweist, so dass eine zähflüssige Kunststoffmasse unter hohem Druck mittels einer Düse 6 in die Form eingespritzt werden kann. Zur Bildung eines Kunststoffteils 9 ist ein zweites Formteil 7 in Spritzrichtung der Düse 6 verschieblich mit einer Aufspannplatte 8 angeordnet. Aus der gezeigten Öffnungsstellung der Spritzgießmaschine 1 wird deutlich, dass die Formteile 5 und 7 auf einer zugewandten Innenseite jeweils solche Ausnehmungen und Vorsprünge aufweisen, dass ein nierenförmiges Kunststoffteil 9 aus einem thermoplastischen Material gespritzt werden kann. Das Kunststoffteil 9 kann beispielsweise als eine Abdeckscheibe eines Scheinwerfers ausgebildet sein. In dem vorliegenden Ausführungsbeispiel werden gleichzeitig zwei gleichförmige Abdeckscheiben hergestellt.

Zur Neutralisierung bzw. Verhinderung des Entstehens einer elektrostatischen Aufladung des Kunststoffteils 9, vorzugsweise an einer Oberfläche 10 desselben, sind im Bereich der Formteile 5, 7 eine Mehrzahl von paarweise angeordneten Elektroden 11 und 12 unterschiedlicher Polarität und für eine elektrisch andere Ausfuhrungsvariante die Anordnung von Einzelelektroden 13 in bipotentialer Auslegung angeordnet. Wie aus der Figur ersichtlich, ist ein erstes Paar 14 solcher Elektroden 11, 12 und eine weitere Ausführungsvariante eines Einzelelements 15 einer Elektrode 13 randseitig an einer Oberseite des zweiten Formteils 7 angeordnet, wobei die Elektroden 11, 12, 13 senkrecht nach unten in Richtung des Kunststoffteils 9 abragen. Ein zweites Paar 16 der ersten Ausführungsvariante und das Einzelelement 17 der zweiten Ausführungsvariante ist an einer dem ersten Formteil 5 zugewandten Vorderseite des zweiten Formteils 7 angeordnet. Die Elektroden 11, 12 des zweiten Paares 16 oder statt dieser die Einzelelektrode 13 des Einzelelements 17 sind von der Vorderseite des zweiten Formteils 7 abragend angeordnet und auf schmale zueinander gekehrte innenliegende Schmalseiten 18 des Kunststoffteils 9 ausgerichtet. Das erste und zweite Paar 14, 16 und / oder der Einzelelemente 15, 17 erstrecken sich in einer gemeinsamen Mittelebene des zweiten Formteils 7, die zugleich eine Symmetrieebene der beiden Kunststoffteile 9 bildet. Dabei ist die erste Anordnung 14, 16 und / oder 15, 17 der Elektroden 11, 12, 13 im wesentlichen auf einen oberen Bereich der Kunststoffteile 9 ausgerichtet, insbesondere auf den oberen Bereich der Schmalseiten 18 und bzw. einer flächigen Oberseite 19 des Kunststoffteils 9. Die Schmalseite 18 und die Oberseite 19 bilden jeweils Oberflächensegmente der Oberseite des Kunststoffteils 9, wobei sie jeweils durch Kanten bogenförmig voneinander begrenzt sind.

An einer Seitenwand 20 der Spritzgießmaschine 1 ist ein weiteres drittes Paar 21 von Elektroden 11, 12 und ein weiteres Einzelelement 22 der Einzelelektrode 13 angeordnet, mittels dessen ein elektrisches Feld erzeugt wird, das auf außen liegende Schmalseiten 23 und die Oberseite 19 der Kunststoffteile 9 einwirkt. Die beschriebenen Paare 14, 16, 21 von den Elektroden 11, 12 und / oder die Einzelelemente 15, 17, 22 der Elektrode 13 sind symmetrisch bezüglich einer horizontalen Mittelebene bzw. vertikalen Mittelebene der Spritzgießmaschine 1 angeordnet, d.h. in einem unteren Bereich des zweiten Formteils 7 kann sich ein weiteres Paar 14, 16 und / oder ein Einzelelement 15, 17 befinden bzw. in einer vorderen, nicht dargestellten zu der Seitenwand 20 parallelen Seitenwand ist ein weiteres Paar 21 und / oder ein weiteres Einzelelement 22 einrichtbar. Auf diese Weise werden die Kunststoffteile 9 in dem Bereich der Schmalseiten 18, 23 und der Oberseite 19 oder gesamtheitlich in allen Oberflächensegmenten von nur einem Paar 14, 16, 21, 24 der Elektroden 11, 12 und / oder von Einzelelementen 15, 17, 22, 26 der Elektrode 13 vollständig mit einem elektrischen Feld beaufschlagt.

Zusätzlich weist die Spritzgießmaschine 1 ein Entnahmeteil 25 (Darstellung ohne Greiferelemente) auf zur selbsttätigen Entnahme der Kunststoffteile 9. Das Entnahmeteil 25 weist in einem unteren Bereich ein Paar 24 von Elektroden 11, 12 und / oder ein Einzelelement 26 einer Einzelelektrode 13 auf, die auf die Oberseite 19 des Kunststoffteile 9 ausgerichtet sind. Durch die notwendige Bewegung des Entnahmeteils 25 von einer oberen in eine dargestellte untere Position werden die Oberseiten 19 der Kunststoffteile 9 kontinuierlich von dem vierten Paar 24 der Elektroden 11, 12 und / oder von dem Einzelelement 26 der Elektrode 13 überstrichen, so daß eine Neutralisierung der elektrostatischen Aufladung auf der Oberseite 19 der Kunststoffteile 9 erfolgen kann. Während die Elemententeile 24 und / oder 26 auf die Kunststoffteile 9 erst nach dem Öffnen der beiden Formteile 5, 7 auf diese einwirken kann, wird das Abstoßen von dem beweglichen Formteil 7 erst ausgeführt, wenn das Entnahmeteil 25 mit dem vierten Paar 24 und / oder dem Einzelelement 26 die Übemahmeposition erreicht hat. Hierdurch können sie bereits beim Entstehen der elektrostatischen Aufladung während des Entformungsvorgangs der elektrostatischen Aufladung entgegenwirken. Die Paare 14, 16, 21 und 24 und / oder die Einzelelemente 15, 17, 22 und 26 können jedes für sich allein in alternativ günstiger Anordnung einer elektrostatischen Aufladung bereits beim Entformen der Kunststoffteile 9 wirkungsvoll entgegenwirken.

Dadurch, daß ein Paar 24 der Elektroden 11, 12 und / oder ein Einzelelement 26 der Elektrode 13 an dem Entnahmeteil 25 befestigt ist, kann der Wirkungszeitraum des elektrischen Feldes auf die Kunststoffteile 9 verlängert werden, bis zur Ablage desselben bzw. zur Weiterverarbeitung in einem weiteren Prozeßschritt außerhalb der Spritzgießmaschine 1.

Die Elektroden 11, 12, 13 weisen nadelförmige Enden 27 auf, so daß sich unabhängig des Vorhandenseins einer elektrotechnisch üblichen gegenpoligen Zweiphasenpotentials und / oder einer anderen weiteren Elektrode 11 oder 12 des jeweils anderen Potentials, eine hohe elektrische Feldstärke aufbauen kann. Der Abstand der Elektroden 11, 12 oder einer Anzahl von Einzelelementen mit der Elektrode 13 ist im Vergleich zur Längs- oder Quererstreckung des formgestalteten Kunststoffteils 9 anwendungsgemäß gering oder mit weiterem Abstand angelegt.

Die Elektroden 11, 12, 13 sind an einer Hochspannungsquelle angeschlossen, die vorzugsweise eine pulsierende Hochspannung mit einer Frequenz von etwa 1 Hz erzeugt. Diese Hochspannung kann in einem Bereich von 0,5 bis 1,5 Hz schwanken. Vorzugsweise liegt an den Elektroden 11, 12, 13 eine Spannung von 6,5 kV an, wobei die Stromstärke 0,7 µA beträgt. Neben dieser bevorzugten Einstellung der Elektroden, die besonders wirkungsvoll ist, ist es auch möglich, die Elektroden 11, 12, 13 an eine Wechselspannungsquelle höherer Frequenz oder an eine Gleichspannungsquelle mit verstellbarer Frequenzabstimmung anzuschließen.

Die Erfindung ist nicht beschränkt auf die Anwendung mittels Spritzgießmaschinen hergestellter Kunststoffteile. Sie ist auch anwendbar auf andere Herstellungsarten, wie zum Beispiel das Form- oder Strangpressen oder in Hygienesystemen.

## Patentansprüche

1. Vorrichtung zum Minimieren bzw. zum Unterbinden von positiven und/oder negativen Ladungen auf einer Oberfläche eines Kunststoffteils, das mittels Spritzgießen, Pressen oder Ziehverfahren in einem ein Entnahmeteil (25) für das Kunststoffteil (9) aufweisenden Werkzeug herstellbar ist,
**dadurch gekennzeichnet,**
**dass** mindestens eine Elektrode (11,12,13) vorgesehen ist, die auf eine Kante des Kunststoffteils (9) ausgerichtet ist, und dass die Elektrode derart von einer Steuereinheit angesteuert ist, dass von der Elektrode (11,12,13) ein veränderbares elektrisches Feld hoher Intensität auf die Kante des Kunststoffteils (9) ausgeht, wobei das Entnahmeteil (25) mindestens eine Elektrode (11,12,13) aufweist, die auf die Oberfläche des Kunststoffteils (9) ausgerichtet ist.

2. Vorrichtung nach Anspruch 1,
**dadurch gekennzeichnet,**
**dass** mindestens eine Elektrode (13) oder ein Paar von Elektroden (11,12) dem Kunststoffteil (9) zugeordnet ist, wobei die Elektroden (11,12,13) im Wechsel von der Steuereinheit mit einer Hochspannung beaufschlagt werden.

3. Vorrichtung nach Anspruch 1 oder 2,
**dadurch gekennzeichnet,**
**dass** die Elektroden (11,12) nacheinander und die Elektrode (13) wechselweise mit unterschiedlicher Polarität von der Steuereinheit ansteuerbar sind.

4. Vorrichtung nach einem der Ansprüche 1 bis 3,
**dadurch gekennzeichnet,**
**dass** die Elektroden (11,12,13) jeweils rechtwinklig zu einer Kante des Kunststoffteils (9) angeordnet sind.

5. Vorrichtung nach einem der Ansprüche 1 bis 4, **gekennzeichnet durch**
eine Anzahl von paarweise in einem vorgegebenen Abstand zueinander angeordneten Elektroden (11,12) unterschiedlicher Polarität, wobei in einer elektrisch anderen Grundauslegung ggf. die Elektrodenpaare teilweise oder insgesamt **durch** eine Einzelelektrode (13) ersetzt sind, die rhythmisch wechselnde Polaritäten eines Spannungsfeldes übertragen kann, wobei die so gebildeten Paare (14,16,21) und/oder Einzelelemente von Elektroden (11,12,13) räumlich verteilt am Werkzeug (2,3) positioniert sind und wobei die Paare (14,16,21,24) von Elektroden (11,12) und/oder die Einzelelemente (15,17,22,26) der Elektrode (13) in unterschiedliche, an die Formgebung des Kunststoffteils (9) angepasste Richtungen orientiert sind.

6. Vorrichtung nach einem der Ansprüche 1 bis 5,
**dadurch gekennzeichnet,**
**dass** die Oberfläche (10) des Kunststoffteils (9) aus mehreren geradlinig oder bogenförmig begrenzten Oberflächensegmenten (18,19,23) besteht und dass jeweils einem Oberflächensegment (18,19,23) zumindest ein Paar (14,16,21,24) von Elektroden (11,12) und/oder ein Einzelelement mit der Elektrode (13) zugeordnet ist.

7. Vorrichtung nach einem der Ansprüche 1 bis 6,
**dadurch gekennzeichnet,**
**dass** zumindest ein Teil der Paare (14,16,21,24) von Elektroden (11,12) und/oder solcher des Einzelelementes (15,17,22,26) der Elektrode (13) randseitig in einer Ebene des Werkzeugs (2,3) oder der Kunststoffteile (9) angeordnet sind und dass die Elektroden (11,12,13) eines Paares (14,16,21,24) in einem solchen Abstand zueinander angeordnet sind, der kleiner ist als die Längserstreckung des den jeweiligen Paaren (14,16,21,24) zugeordneten Oberflächensegmentes (18,23).

8. Vorrichtung nach einem der Ansprüche 1 bis 7,
**dadurch gekennzeichnet,**
**dass** zumindest ein Paar (14,16,21,24) der Elektroden (11,12) und/oder von Elementen (15,17,22,26) der Elektrode (13) in einem solchen Abstand zueinander angeordnet sind, der außerhalb der Längs-, Quer- oder Höhenerstreckung des den jeweiligen Paaren (14,16,21,24) zugeordneten Oberflächensegmentes (18,19,23) oder einer Kantenebene des Kunststoffteils (9) bemessen ist.

9. Vorrichtung nach einem der Ansprüche 1 bis 8,
**dadurch gekennzeichnet,**
**dass** ein als bifunktionale Elektrode (13) ausgelegtes Element (15,17,22,26) im Umfeld des Kunststoffteils (9) derart angeordnet ist, dass die Elektrode (13) aus einer solchen Position die gesamte Struktur beidseitig aller Oberflächensegmente (18,19,23) in der Zusammenfassung (10) des ganzen Kunststoffteils (9) eine ganzseitige Neutralisierung an der Ober- und der Unterseite desselben Teiles gleichzeitig bezwecken kann.

10. Vorrichtung nach einem der Ansprüche 1 bis 9,
**dadurch gekennzeichnet,**
**dass** zumindest ein Paar (14,15,21,24) von Elektroden (11,12) und/oder ein Einzelelement (15,17,22,26) der Elektrode (13) an einem beweglichen Teil (zweites Formteil (7)) des Werkzeugs angeordnet ist.

11. Vorrichtung nach einem der Ansprüche 1 bis 10,
**dadurch gekennzeichnet,**
**dass** zumindest ein Elektrodenelement (15,17,22,26) an einem stationären Trägerteil oder an dem feststehenden Formteil (5) angeordnet ist.

12. Vorrichtung nach einem der Ansprüche 1 bis 11,
**dadurch gekennzeichnet,**
**dass** zumindest eines der Paare (14,16,21,24) und/oder der Einzelelemente (15,17,22,26) an einem fahrbaren Trägerarm außerhalb der Spritzgießmaschine (1) ohne Entnahmesegmente angeordnet ist.

13. Vorrichtung nach einem der Ansprüche 1 bis 12,
**dadurch gekennzeichnet,**
**dass** die Einzelelemente (15,17,22,26) der Elektrode (13) an einer gemeinsamen hohen Gleichstromquelle angeschlossen sind.

14. Vorrichtung nach einem der Ansprüche 1 bis 8,
**dadurch gekennzeichnet,**
**dass** die Paare (14,16,21,24) von Elektroden (11,13) und/oder die Einzelelemente (15,17,22,26) der Elektrode (13) an einer gemeinsamen hohen Wechselstromquelle angeschlossen sind.

15. Vorrichtung nach Anspruch 1 oder 14,
**dadurch gekennzeichnet,**
**dass** die Paare (14,16,21,24) von Elektroden (11,12) und/oder die Einzelelemente (15,17,22,26) der Elektrode (13) an einer Hochspannungsquelle angeschlossen sind, die eine pulsierende Hochspannung mit einer Frequenz in einem Bereich von 0,5 Hz bis 10 Hz liefert oder die eine statische Hochspannung abgibt.

16. Vorrichtung nach einem der Ansprüche 1 bis 15,
**dadurch gekennzeichnet,**
**dass** die Elektroden (11,12,13) nadelförmige Enden (27) aufweisen.

17. Verfahren zum Minimieren bzw. Unterbinden von positiven und/oder negativen Ladungen auf einer Oberfläche eines Kunststoffteils, wobei das Kunststoffteil in einem Werkzeug spritzgegossen oder gepresst wird und anschließend von einem Entnahmeteil aus dem Werkzeug entnommen wird,
**dadurch gekennzeichnet,**
**dass** das Kunststoffteil (9) bereits vor dem Entformen einem durch eine Anzahl von jeweils zu unterschiedlichen Oberflächensegmenten (18,19,23) ausgerichteten Elektroden (11,12,13) bewirkten elektrischen Feld hoher Feldstärke ausgesetzt wird und das elektrische Feld mindestens bis zur Entnahme des Kunststoffteils (9) aus dem Werkzeug aufrechterhalten wird, wobei die Oberfläche des Kunststoffteils (9) während der Entnahme von einem von mindestens einer am Entnahmeteil (25) angeordneten Elektrode (11,12,13) ausgehenden elektrischen Feld beaufschlagt wird.

18. Verfahren nach Anspruch 17,
**dadurch gekennzeichnet,**
**dass** zumindest ein Paar (14,16,21,24) von Elektroden (11,12) unterschiedlicher Polarität und/oder ein Einzelelement (15,17,21,26) der Elektrode (13) in der Auslegung bipotentialer Polaritätsfolge zusammen mit einer Werkzeughälfte (zweites Formteil (7)) des Werkzeugs bewegt wird.

19. Verfahren nach Anspruch 17 oder 18,
**dadurch gekennzeichnet,**
**dass** die Kunststoffteile (9) während eines nachfolgenden Prozessschrittes zur Veredelung mit Paaren (14,16,21,24) von Elektroden (11,12) und/oder Einzelelementen (15,17,22,26) der Elektrode (13) behandelt werden.

## Claims

1. An apparatus for minimising or eliminating positive and/or negative charges on a surface of a plastic part which can be produced by means of injection moulding, pressing or drawing processes in a tool having a removal member (25) for the plastic part (9), **characterised in that** there is provided at least one electrode (11, 12, 13) which is oriented on to an edge of the plastic part (9) and that the electrode is actuated by a control unit in such a way that a variable electrical field of high intensity issues from the electrode (11, 12, 13) on to the edge of the plastic part (9), the removal member (25) having at least one electrode (11, 12, 13) which is oriented towards the surface of the plastic part (9).

2. Apparatus according to claim 1 **characterised in that** at least one electrode (13) or a pair of electrodes (11, 12) is associated with the plastic part (9), wherein the electrodes (11, 12, 13) are alternately subjected to the action of a high voltage by the control unit.

3. Apparatus according to claim 1 or claim 2 **characterised in that** the electrodes (11, 12) in succession and the electrode (13) are alternately actuable by the control unit with differing polarity.

4. Apparatus according to one of claims 1 to 3 **characterised in that** the electrodes (11, 12, 13) are respectively arranged at a right angle to an edge of the plastic part (9).

5. Apparatus according to one of claims 1 to 4 **characterised by** a number of electrodes (11, 12) of differing polarity which are arranged in paired relationship at a predetermined spacing relative to each other, wherein in an electrically different basic configuration the electrode pairs are possibly replaced partly or entirely by an individual electrode (13) which can transmit rhythmically changing polarities of a voltage field, wherein the pairs (14, 16, 21) formed in that way and/or individual elements of electrodes (11, 12, 13) are positioned in spatially distributed relationship on the tool (2, 3) and wherein the pairs (14, 16, 21, 24) of electrodes (12, 13) and/or the individual elements (15, 17, 22, 26) of the electrode (13) are oriented in different directions suited to the configuration of the plastic part (9).

6. Apparatus according to one of claims 1 to 5 **characterised in that** the surface (10) of the plastic part (9) comprises a plurality of surface segments (18, 19, 23) which are delimited in a straight line or an arcuate shape and that associated with a respective surface segment (18, 19, 23) is at least one pair (14, 16, 21, 24) of electrodes (11, 12) and/or an individual element with the electrode (13).

7. Apparatus according to one of claims 1 to 6 **characterised in that** at least a part of the pairs (14, 16, 21, 24) of electrodes (11, 12) and/or such of the individual element (15, 17, 22, 26) of the electrode (13) are arranged at the edge in a plane of the tool (2, 3) or the plastic parts (9) and that the electrodes (11, 12, 13) of a pair (14, 16, 21, 24) are arranged relative to each other at such a spacing which is smaller than the longitudinal extent of the surface segment (18, 23) associated with the respective pairs (14, 16, 21, 24).

8. Apparatus according to one of claims 1 to 7 **characterised in that** at least one pair (14, 16, 21, 24) of the electrodes (11, 12) and/or elements (15, 17, 22, 26) of the electrode (13) are arranged relative to each other at such a spacing which is of a dimension outside the longitudinal, transverse or heightwise extent of the surface segment (18, 19, 23) associated with the respective pairs (14, 16, 21, 24) or an edge plane of the plastic part (9).

9. Apparatus according to one of claims 1 to 8 **characterised in that** an element (15, 17, 22, 26) designed as a bifunctional electrode (13) is arranged in the surroundings of the plastic part (9) in such a way that from such a position the electrode (13) can simultaneously aim in respect of the entire structure on both sides of all surface segments (18, 19, 23) in the assembly (10) of the entire plastic part (9) at neutralisation over the entire side at the top side and the bottom side of the same part.

10. Apparatus according to one of claims 1 to 9 **characterised in that** at least one pair (14, 15, 21, 24) of electrodes (11, 12) and/or an individual element (15, 17, 22, 26) of the electrode (13) is arranged on a movable part (second mould part (7)) of the tool.

11. Apparatus according to one of claims 1 to 10 **characterised in that** at least one electrode element (15, 17, 22, 26) is arranged on a stationary carrier part or on the stationary mould part (5).

12. Apparatus according to one of claims 1 to 11 **characterised in that** at least one of the pairs (14, 16, 21, 24) and/or of the individual elements (15, 17, 22, 26) is arranged on a movable carrier arm outside the injection moulding machine (1) without removal segments.

13. Apparatus according to one of claims 1 to 12 **characterised in that** the individual elements (15, 17, 22, 26) of the electrode (13) are connected to a common high direct current source.

14. Apparatus according to one of claims 1 to 8 **characterised in that** the pairs (14, 16, 21, 24) of electrodes (11, 13) and/or the individual elements (15, 17, 22, 26) of the electrode (13) are connected to a common high alternating current source.

15. Apparatus according to claim 1 or claim 14 **characterised in that** the pairs (14, 16, 21, 24) of electrodes (11, 12) and/or the individual elements (15, 17, 22, 26) of the electrode (13) are connected to a high voltage source which delivers a pulsating high voltage at a frequency in a range of 0.5 Hz to 10 Hz or produces a static high voltage.

16. Apparatus according to one of claims 1 to 15 **characterised in that** the electrodes (11, 12, 13) have needle-shaped ends (27).

17. A method of minimising or eliminating positive and/or negative charges on a surface of a plastic part, wherein the plastic part is injection moulded or pressed in a tool and then removed from the tool by a removal member, **characterised in that** the plastic part (9) is already exposed prior to removal to an electrical field of high field strength produced by a number of electrodes (11, 12, 13) directed towards respective different surface segments (18, 19, 23) and the electrical field is maintained at least until the plastic part (9) is removed from the tool, wherein the surface of the plastic part (9) is acted upon during the removal operation by an electrical field issuing from at least one electrode (11, 12, 13) arranged on the removal member (25).

18. A method according to claim 17 **characterised in that** at least one pair (14, 16, 21, 24) of electrodes (11, 12) of differing polarity and/or an individual element (15, 17, 21, 26) of the electrode (13) is moved in the configuration of bipotential polarity sequence together with a tool half (second mould part (7)) of the tool.

19. A method according to claim 17 or claim 18 **characterised in that** the plastic parts (9) are treated during a subsequent step in the process for refinement purposes with pairs (14, 16, 21, 24) of electrodes (11, 12) and/or individual elements (15, 17, 22, 26) of the electrode (13).

## Revendications

1. Dispositif pour réduire à un minimum ou supprimer les charges positives et / ou négatives sur une surface d'une pièce en plastique qui peut être réalisée par injection, matriçage ou emboutissage dans un outil comportant une pièce d'extraction (25) pour la pièce en plastique (9),
**caractérisé en ce que**
au moins une électrode (11, 12, 13) est prévue, qui est dirigée sur une arête de la pièce de plastique (9), et **en ce que** l'électrode est commandée par une unité de commande, de telle sorte qu'un champ électrique variable de haute intensité va de l'électrode (11, 12, 13) à l'arête de la pièce de plastique (9), moyennant quoi la pièce d'extraction (25) comprend au moins une électrode (11, 12, 13), qui est dirigée sur la surface de la pièce de plastique (9).

2. Dispositif selon la revendication 1,
**caractérisé en ce que**
au moins une électrode (13) ou une paire d'électrodes (11, 12) sont affectées à la pièce de plastique (9), moyennant quoi les électrodes (11, 12, 13) sont soumises alternativement par l'unité de commande à une haute tension.

3. Dispositif selon la revendication 1 ou 2,
**caractérisé en ce que**
les électrodes (11, 12) peuvent être excitées par l'unité de commande l'une après l'autre, et l'électrode (13) alternativement, avec une polarité différente.

4. Dispositif selon l'une des revendications 1 à 3,
**caractérisé en ce que**
les électrodes (11, 12, 13) sont disposées respectivement à angle droit par rapport à une arête de la pièce de plastique (9).

5. Dispositif selon l'une des revendications 1 à 4,
**caractérisé par**
un nombre d'électrodes (11, 12) de polarités différentes disposées par paires à une distance prédéfinie les unes des autres, moyennant quoi, dans une conception de base électriquement différente, les paires d'électrodes sont remplacées le cas échéant en partie ou en totalité par une électrode (13) unique, qui peut transmettre des polarités rythmiquement variables d'un champ de tension, moyennant quoi les paires (14, 16, 21) ainsi formées et / ou les éléments simples d'électrodes (11, 12, 13) sont positionnés sur l'outil (2, 3) répartis spatialement, et moyennant quoi les paires (14, 16, 21, 24) d'électrodes (11, 12) et / ou les éléments simples de l'électrode (13) sont orientés dans différentes directions, adaptées à la configuration de forme de la pièce de plastique (9).

6. Dispositif selon l'une des revendications 1 à 5,
**caractérisé en ce que**
la surface (10) de la pièce de plastique (9) consiste en plusieurs segments de surface (18, 19, 23) limités par des droites ou des arcs, et **en ce qu'**à un segment de surface (18, 19, 23) respectivement est affectée au moins une paire (14, 16, 21, 24) d'électrodes (11, 12) et / ou un élément simple avec l'électrode (13).

7. Dispositif selon l'une des revendications 1 à 6,
**caractérisé en ce que**
au moins une partie des paires (14, 16, 21, 24) d'électrodes (11, 12) et / ou une partie de l'élément simple (15, 17, 22, 26) de l'électrode (13) sont disposés du côté du bord dans un plan de l'outil (2, 3) ou des pièces de plastique (9) et **en ce que** les électrodes (11, 12, 13) d'une paire (14, 16, 21, 24) sont disposées à une telle distance les unes des autres, qui est plus petite que l'étendue longitudinale du segment de surface (18, 23) affecté aux paires (14, 16, 21, 24) respectives.

8. Dispositif selon l'une des revendications 1 à 7,
**caractérisé en ce que**
au moins une paire (14, 16, 21, 24) des électrodes (11, 12) et / ou des éléments (15, 17, 22, 26) de l'électrode (13) sont disposés à une telle distance les uns des autres, qui est mesurée au-delà de l'étendue longitudinale, transversale et verticale du segment de surface (18, 19, 23) affecté aux paires (14, 16, 21, 24) respectives ou d'un plan d'arête de la pièce de plastique (9).

9. Dispositif selon l'une des revendications 1 à 8,
**caractérisé en ce que**
un élément (15, 17, 22, 26) conçu comme électrode (13) bifonctionnelle est disposé de telle sorte dans le champ avoisinant la pièce de plastique (9) que l'électrode (13) peut, d'une telle position, avoir simultanément pour but l'ensemble de la structure des deux côtés de tous les segments de surface (18, 19, 23) dans la somme (10) de l'ensemble de la pièce de plastique (9), une neutralisation de toute la face à la face supérieure et inférieure de ladite pièce.

10. Dispositif selon l'une des revendications 1 à 9,
**caractérisé en ce que**
au moins une paire (14, 16, 21, 24) d'électrodes (11, 12) et / ou un élément simple (15, 17, 22, 26) de l'électrode (13) sont disposés sur une pièce mobile (deuxième partie du moule (7)) de l'outil.

11. Dispositif selon l'une des revendications 1 à 10,
**caractérisé en ce que**
au moins un élément d'électrode (15, 17, 22, 26) est disposé sur une pièce support stationnaire ou sur la pièce fixe du moule (5) .

12. Dispositif selon l'une des revendications 1 à 11,
**caractérisé en ce que**
au moins une des paires (14, 16, 21, 24) et / ou un des éléments simples (15, 17, 22, 26) est disposé sur un bras support mobile en dehors de la presse d'injection (1) sans segment d'extraction.

13. Dispositif selon l'une des revendications 1 à 12,
**caractérisé en ce que**
les éléments simples (15, 17, 22, 26) de l'électrode (13) sont branchés à une source haute commune de courant continu.

14. Dispositif selon l'une des revendications 1 à 8,
**caractérisé en ce que**
les paires (14, 16, 21, 24) d'électrodes (11, 13) et / ou les éléments simples (15, 17, 22, 26) de l'électrode (13) sont branchés à une source haute commune de courant alternatif.

15. Dispositif selon la revendication 1 ou 14,
**caractérisé en ce que**
les paires (14, 16, 21, 24) d'électrodes (11, 12) et / ou les éléments simples (15, 17, 22, 26) de l'électrode (13) sont branchés à une source de haute tension qui délivre une haute tension pulsée avec une fréquence comprise dans un intervalle de 0,5 Hz à 10 Hz, ou une haute tension statique.

16. Dispositif selon l'une des revendications 1 à 15,
**caractérisé en ce que**
les électrodes (11, 12, 13) comportent des extrémités en forme d'aiguilles (27)

17. Procédé pour réduire à un minimum ou supprimer les charges positives et / ou négatives sur une surface d'une pièce en plastique, la pièce en plastique étant moulée par injection ou matricée dans un outil et est ensuite extraite de l'outil par une pièce d'extraction,
**caractérisé en ce que**
la pièce de plastique (9) est soumise dès avant le démoulage à un champ électrique de haute intensité de champ causé par un nombre d'électrodes (11, 12, 13) orientées respectivement sur différents segments de la surface (18, 19, 23), et **en ce que** le champ électrique est maintenu au moins jusqu'à l'extraction de la pièce de plastique (9) hors de l'outil, moyennant quoi la surface de la pièce de plastique (9) est soumise pendant l'extraction à un champ électrique dû à au moins une électrode (11, 12, 13) disposée sur la pièce d'extraction (25).

18. Procédé selon la revendication 17,
**caractérisé en ce que**,
dans la conception de séquence de polarités bipotentielles, au moins une paire (14, 16, 21, 24) d'électrodes (11, 12) de différentes polarités et / ou un élément simple (15, 17, 22, 26) de l'électrode (13) sont déplacés ensemble avec un demi-outil (deuxième pièce de moule (7)) de l'outil.

19. Procédé selon la revendication 17 ou 18,
**caractérisé en ce que**
les pièces de plastique (9) sont traitées pour amélioration pendant une étape suivante du processus par des paires (14, 16, 21, 24) d'électrodes (11, 12) et / ou des éléments simples (15, 17, 22, 26) de l'électrode (13).
